# EUROPEAN PATENT APPLICATION

(11) **EP 4 092 576 A2**
(43) Date of publication of application: **23.11.2022**
(21) Application number: 22157720.8
(22) Date of filing: 21.02.2022
(51) Int. Cl.: G06N 3/00, G06N 3/08, G06N 5/04, G06N 20/00

(54) **LEARNING DEVICE, LEARNING METHOD, AND COMPUTER PROGRAM PRODUCT FOR TRAINING**

(30) Priority: 18.05.2021 JP 2021083679
(71) Applicant: KABUSHIKI KAISHA TOSHIBA, Minato-ku Tokyo 105-0023 (JP)
(72) Inventor: MINAMOTO, Gaku, Minato-ku, Tokyo, 105-0023 (JP); KANEKO, Toshimitsu, Minato-ku, Tokyo, 105-0023 (JP)
(74) Representative: Hoffmann Eitle

(57) **Abstract**

A learning device 10A includes an acquisition unit 40A, a first action determination unit 40B, a second action determination unit 40C, and a selection unit 40D. The acquisition unit 40A acquires a current state of a mobile robot 20 as a device. The first action determination unit 40B learns a reinforcement learning model, and determines a first action of the mobile robot 20 on the basis of the current state and the reinforcement learning model. The second action determination unit 40C determines a second action of the mobile robot 20 on the basis of the current state and a first rule. The selection unit 40D selects one of the first action and the second action as a third action to be output to the mobile robot 20 according to a progress of learning of the reinforcement learning model.

## Description

### FIELD

Arrangements described herein relate generally to a learning device, a learning method, and a computer program product for training.

### BACKGROUND

Action learning using reinforcement learning is performed. In the reinforcement learning, an optimal action of a device is learned by repeating various actions by trial and error. In a case where learning is performed actually using a device such as a robot, the device may fall into an unintended state, and an accident or a failure may occur during the reinforcement learning. Therefore, it is required to secure safety during the learning.

For example, a method is disclosed in which a framework of a safety operation is determined based on a rule, and action parameters are determined by the reinforcement learning within the determined framework. In addition, a method is proposed for which a control amount generated by a learning-based algorithm is corrected so as not to deviate from a control amount generated based on a rule.

However, since a random action search is performed at the time of the reinforcement learning in the framework, in the related art, a performance immediately after the start of learning is low, and it takes time to reach necessary performance. In addition, in the related art, it is necessary to learn in advance by the learning-based algorithm. Therefore, in the related art, it is difficult to perform the reinforcement learning of the action of the device while being applied to the device.

In view of the above, an objective by the arrangements described herein is to provide a learning device, a learning method, and a computer program product enabling reinforcement learning while being applied to a device.

### BRIEF DESCRIPTION OF THE DRAWINGS

FIG. 1 is an explanatory diagram of a learning system;
FIG. 2 is a functional block diagram of the learning system;
FIG. 3 is an explanatory diagram of a probability of selecting a first action;
FIG. 4 is a schematic diagram of a display screen;
FIG. 5 is a schematic diagram of the display screen;
FIG. 6 is a schematic diagram of the display screen;
FIG. 7 is a flowchart illustrating a flow of information processing of a learning device;
FIG. 8 is a flowchart illustrating a flow of information processing of a mobile robot;
FIG. 9 is an explanatory diagram of a reward curve;
FIG. 10 is a functional block diagram of the learning system;
FIG. 11 is a schematic diagram of the display screen;
FIG. 12 is a schematic diagram of the display screen;
FIG. 13 is a flowchart illustrating the flow of the information processing of the learning device; and
FIG. 14 is a hardware configuration diagram.

### DETAILED DESCRIPTION

Hereinafter, arrangements of a learning device, a learning method, and a computer program product for training will be described in detail with reference to the accompanying drawings.

### First arrangement

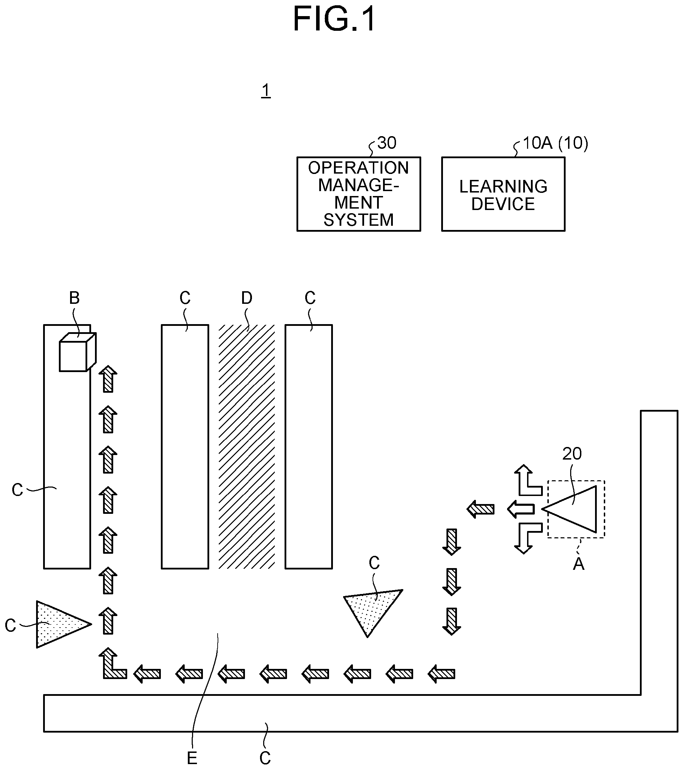

FIG. 1 is an explanatory diagram illustrating an example of a learning system 1 of this arrangement.

The learning system 1 includes a learning device 10A, a mobile robot 20, and an operation management system 30. A learning device 10, the mobile robot 20, and the operation management system 30 are connected to be communicable with each other in a wireless or wired manner.

The learning device 10A is an example of the learning device 10. The learning device 10 is an information processing device that learns an action of the mobile robot 20 by reinforcement learning.

The mobile robot 20 is an example of a device. The device is an object of which the action is subjected to the reinforcement learning by the learning device 10. The action may also be referred to as an operation. The device is a movable body in which at least a part of mechanism operates. The device operates by being controlled by a computer. At least a part of the mechanism of the movable body may operate, and the movable body may have either an aspect in which the position of the main body of the movable body moves or an aspect in which the position of the main body of the movable body is fixed without moving. Examples of the device include a work robot having a manipulator, a mobile robot having a position moving mechanism, an automobile, a ship, and a flying object. Specifically, the automobile is an autonomous driving vehicle that autonomously travels. The flying object is, for example, a drone.

In this arrangement, an aspect in which the device is the mobile robot 20 will be described as an example.

The mobile robot 20 has, for example, a predetermined function. FIG. 1 illustrates an example in which the mobile robot 20 has a carrying function of carrying a load or the like while autonomously moving in a predetermined area such as a factory or a warehouse. For example, the mobile robot 20 autonomously moves from a departure point A toward a destination point B. The departure point A is a standby place of the mobile robot 20 or the like. The destination point B is a storage place of the load to be carried or the like.

The departure point information indicating the departure point A and the destination point information indicating the destination point B are transmitted from the operation management system 30 to the mobile robot 20, for example.

The operation management system 30 is an information processing device that manages the operation of the mobile robot 20.

There are, for example, various obstacles C and entry prohibition areas D between the departure point A and the destination point B. The obstacle C is an obstacle to the movement of the mobile robot 20. The obstacle C is, for example, another mobile robot, a wall, a shelf, a door, a person, or the like. The entry prohibition area D is an area where the entry of the mobile robot 20 is prohibited. The mobile robot 20 needs to safely and efficiently move in a travelable area E while avoiding collision with the obstacle C and avoiding entry into the entry prohibition area D.

The learning device 10A performs reinforcement learning of the action of the mobile robot 20. The learning device 10A of this arrangement performs reinforcement learning of the action of the mobile robot 20 while applying the mobile robot 20, which is an actual machine, to the site instead of learning in advance.

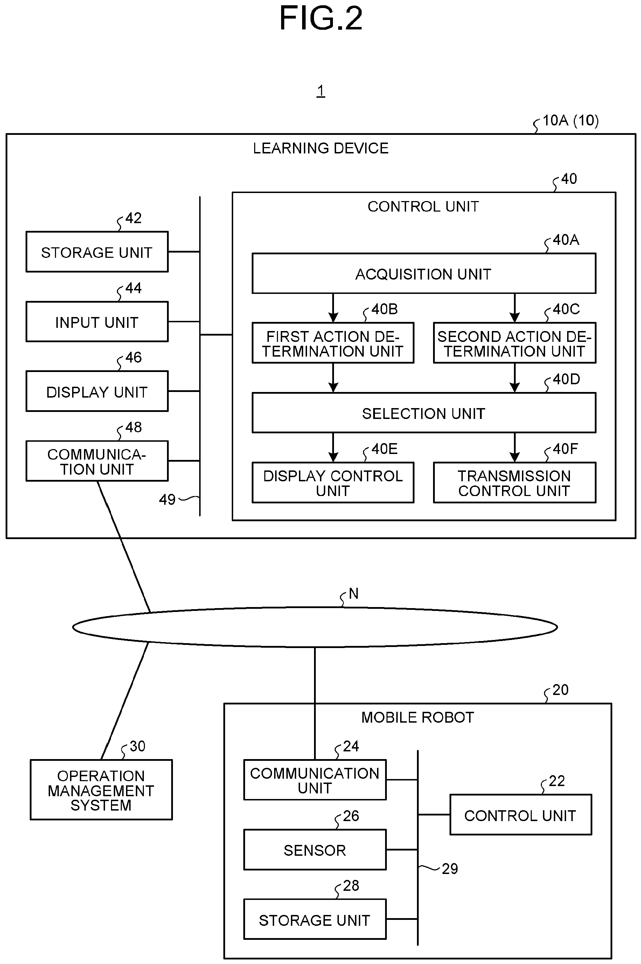

FIG. 2 is a functional block diagram of an example of the learning system 1.

The learning system 1 includes a learning device 10A, a mobile robot 20, and an operation management system 30. The learning device 10A, the mobile robot 20, and the operation management system 30 are communicably connected via a network N or the like.

The mobile robot 20 includes a control unit 22, a communication unit 24, a sensor 26, and a storage unit 28. The control unit 22, the communication unit 24, the sensor 26, and the storage unit 28 are communicably connected via a bus 29 or the like.

The control unit 22 executes information processing in the mobile robot 20. The control unit 22 controls the action of the mobile robot 20. The communication unit 24 is a communication interface that communicates with the learning device 10A and the operation management system 30 via the network N or the like.

The sensor 26 detects the mobile robot 20 and the surrounding environment of the mobile robot 20. In this arrangement, the sensor 26 detects the position information, vehicle speed information, acceleration information, and environment information of the mobile robot 20 and the like. The environment information is information indicating a state around the mobile robot 20. The environment information is, for example, information indicating a captured image around the mobile robot 20, a detection result of an object such as the obstacle C around the mobile robot 20, and the like.

It is sufficient if the sensor 26 is a sensor capable of detecting the mobile robot 20 and the surrounding environment of the mobile robot 20. The sensor 26 is, for example, a camera, a radar device, a laser range finder, a vehicle speed sensor, an acceleration sensor, or the like.

It is sufficient if the sensor 26 can detect the mobile robot 20 and the surrounding environment of the mobile robot 20, and the arrangement position and the number of arrangements are not limited. Furthermore, the sensor 26 may be mounted outside the mobile robot 20. For example, the sensor 26 may be installed in a movement environment where the mobile robot 20 moves. Furthermore, the sensor 26 may be installed in both the mobile robot 20 and the movement environment of the mobile robot 20.

The control unit 22 transmits the detection result of the sensor 26 to the learning device 10A. In this arrangement, the control unit 22 transmits the detection result of the sensor 26 to the learning device 10A every predetermined time. That is, the control unit 22 of the mobile robot 20 sequentially transmits detection results continuous in time series to the learning device 10A.

The storage unit 28 stores various types of data. The storage unit 28 is, for example, a random access memory (RAM), a semiconductor memory element such as a flash memory, a hard disk, an optical disk, or the like.

The operation management system 30 is an information processing device that manages the operation of the mobile robot 20. In this arrangement, the operation management system 30 transmits map information to the mobile robot 20. Incidentally, the operation management system 30 may transmit the map information to both the mobile robot 20 and the learning device 10A.

The map information includes departure point information, destination point information, entry prohibition area information, travelable area information, obstacle information, and the like. The departure point information is information indicating the departure point. The destination point information is information indicating the destination point. The entry prohibition area information is information indicating the entry prohibition area. The travelable area information is information indicating a travelable area where the mobile robot 20 can travel. Specifically, the departure point information, the destination point information, the entry prohibition area information, and the travelable area information are information respectively representing the departure point A, the destination point B, the entry prohibition area D, and the travelable area E in FIG. 1.

The obstacle information is information indicating the obstacle C. In this arrangement, the obstacle information included in the map information is information indicating the obstacle C having a low possibility of movement or a low frequency of movement. The obstacle C having a low possibility of movement or a low frequency of movement is, for example, a wall, a shelf, a door, or the like.

The learning device 10A includes a control unit 40, a storage unit 42, an input unit 44, a display unit 46, and a communication unit 48. The control unit 40, the storage unit 42, the input unit 44, the display unit 46, and the communication unit 48 are communicably connected via a bus 49 or the like.

The storage unit 42 stores various types of data. The storage unit 42 is, for example, a RAM, a semiconductor memory element such as a flash memory, a hard disk, an optical disk, or the like. Incidentally, the storage unit 42 may be a storage device provided outside the learning device 10A. Furthermore, the storage unit 42 may be a storage medium in which programs and various types of information are downloaded via a local area network (LAN), the Internet, or the like and stored or temporarily stored.

The input unit 44 receives various operations by a user. The input unit 44 is, for example, a keyboard, a pointing device such as a mouse, a microphone, or the like.

The display unit 46 displays various types of information. The display unit 46 displays, for example, settings related to the mobile robot 20, a state of the mobile robot 20, a work status by the mobile robot 20, and the like.

Incidentally, the display unit 46 and the input unit 44 may be integrally configured as a touch panel. Furthermore, the input unit 44 and the display unit 46 may be configured separately from a learning device 10B. In this case, it is sufficient if the input unit 44 and the display unit 46 may be configured to be communicably connected to the learning device 10B.

The communication unit 48 is a communication interface that communicates with the mobile robot 20 and the operation management system 30 via the network N or the like.

Incidentally, at least one of the storage unit 42 and the control unit 40 may be configured to be mounted on an external information processing device such as a server device connected via the network N and the communication unit 48. Furthermore, at least one of functional units to be described later included in the control unit 40 may be mounted on an external information processing device such as a server device connected to the control unit 40 via the network N and the communication unit 48.

The control unit 40 executes various types of information processing in the learning device 10A.

The control unit 40 includes an acquisition unit 40A, a first action determination unit 40B, a second action determination unit 40C, a selection unit 40D, a display control unit 40E, and a transmission control unit 40F.

The acquisition unit 40A, the first action determination unit 40B, the second action determination unit 40C, the selection unit 40D, the display control unit 40E, and the transmission control unit 40F are realized by one or more processors. For example, each of the above units may be realized by causing a processor such as a central processing unit (CPU) to execute a program, that is, by software. Each of the above units may be realized by a processor such as a dedicated IC, that is, by hardware. Each of the above units may be realized by using software and hardware together. In a case where a plurality of processors is used, each processor may realize one of the units, or may realize two or more of the units.

The acquisition unit 40A acquires the current state of the mobile robot 20. The acquisition unit 40A acquires the current state of the mobile robot 20 by using the detection result of the sensor 26 received from the mobile robot 20 and the map information received from the operation management system 30. Incidentally, the acquisition unit 40A may receive the map information from the mobile robot 20.

The current state of the mobile robot 20 is the current state information of the mobile robot 20. The state information includes the state information of the main body of the mobile robot 20, the state information of surrounding obstacles, and the map information.

The state information of the main body of the mobile robot 20 is information indicating the state of the main body of the mobile robot 20. The state information of the main body of the mobile robot 20 is, for example, the position information, vehicle speed information, and acceleration information of the mobile robot 20, and the like.

For example, the acquisition unit 40A acquires the position information of the mobile robot 20 by analyzing the captured images of a plurality of cameras included in the detection result acquired from the acquisition unit 40A. For example, the acquisition unit 40A specifies the position coordinates of the mobile robot 20 by analyzing the captured images of the mobile robot 20 captured by a plurality of sensors 26 installed in the movement environment of the mobile robot 20. Further, the acquisition unit 40A acquires the specified position coordinates as position information of the mobile robot 20.

For example, the acquisition unit 40A acquires the vehicle speed information and the acceleration information of the mobile robot 20 by specifying the vehicle speed information and the acceleration information included in the detection result acquired from the mobile robot 20. The acquisition unit 40A may acquire the vehicle speed information and the acceleration information of the mobile robot 20 by analyzing time-series captured images of the mobile robot 20 and the like.

The state information of the surrounding obstacles is information indicating the state of the obstacle C present around the mobile robot 20. The state information of the surrounding obstacle includes, for example, the position information and speed information of the obstacle C present around the mobile robot 20. The acquisition unit 40A acquires the position information and speed information of the obstacle C by analyzing the detection result of the sensor 26 such as a camera and a radar device. Incidentally, the acquisition unit 40A may acquire the relative position and the relative speed of the obstacle C with respect to the mobile robot 20 as the position information and the speed information of the obstacle C. Furthermore, the acquisition unit 40A may acquire the captured image of the periphery of the mobile robot 20 as the state information of the surrounding obstacle. Furthermore, the acquisition unit 40A may acquire the state information of the surrounding obstacle by specifying the obstacle information included in the map information.

When acquiring the current state of the mobile robot 20, the acquisition unit 40A calculates the reward of the acquired current state. The reward is a reward used in the learning of a reinforcement learning model provided in the first action determination unit 40B described later.

The acquisition unit 40A calculates the reward used in learning of the reinforcement learning model on the basis of the preference of the current state that is a result of the action of the mobile robot 20.

Specifically, the acquisition unit 40A calculates a reward having a higher value when the current state as the result of the action of the mobile robot 20 indicates a preferable state. On the other hand, the acquisition unit 40A calculates a reward having a smaller value when the current state as the result of the action of the mobile robot 20 indicates an unfavorable state.

The preferable state means a state in which the mobile robot 20 has acted according to a predetermined reference.

It is sufficient if the reference is determined in advance. For example, the preferable state indicates avoidance of collision with the obstacle C, avoidance of entry into the entry prohibition area D, arrival at the destination point B, arrival at the destination point B in a short required time, a plurality of times of reciprocation from the departure point A to the destination point B, and the like.

The acquisition unit 40A calculates the reward by determining whether or not the action of the mobile robot 20 is in the preferable state on the basis of the acquired current state of the mobile robot 20.

For example, in the following cases, the acquisition unit 40A determines that the action of the mobile robot 20 is in the preferable state, and calculates a reward having a higher value. For example, a case is assumed in which the acquisition unit 40A determines that the mobile robot 20 has reached the destination point B on the basis of the acquired current state. In this case, the acquisition unit 40A calculates a reward having a high value. Furthermore, a case is assumed in which the acquisition unit 40A specifies the required time required to reach the destination point B from the departure point A on the basis of the acquired current state. In this case, the acquisition unit 40A calculates a reward having a higher value when the required time is shorter. Furthermore, a case is assumed in which the acquisition unit 40A calculates the number of times of reciprocation per unit time from the departure point A to the destination point B on the basis of the acquired current state. In this case, the acquisition unit 40A calculates a reward having a higher value when the number of times of reciprocation is larger.

For example, in the following cases, the acquisition unit 40A determines that the action of the mobile robot 20 is in the unfavorable state, and calculates a reward having a smaller value, for example, a negative value. For example, a case is assumed in which the acquisition unit 40A determines that the mobile robot 20 is in the unfavorable state on the basis of the acquired current state. For example, a case is assumed in which the acquisition unit 40A determines, for example, that the destination point B is unreachable, the mobile robot 20 enters the entry prohibition area D, or the mobile robot 20 collides with the obstacle C on the basis of the current state. In this case, the acquisition unit 40A calculates a reward having a smaller value.

Next, the first action determination unit 40B will be described. The first action determination unit 40B has a learning function of learning the reinforcement learning model. The first action determination unit 40B determines the first action of the mobile robot 20 on the basis of the current state and the reinforcement learning model. That is, the first action determination unit 40B determines the first action based on learning using the reinforcement learning model.

The reinforcement learning model is a machine learning model that outputs a first action on the basis of the current state.

The first action is information indicating an action to be taken next by the mobile robot 20. In other words, the first action is information indicating an action determined based on learning. The first action is, for example, information indicating the traveling direction of the mobile robot 20. The traveling direction indicates, for example, any one of right, left, straight, and stop. Incidentally, the first action may be information indicating the traveling direction and the target speed of the mobile robot 20. Furthermore, the first action is not limited to the traveling direction and the target speed as long as the first action is information indicating the action to be taken next by the mobile robot 20. For example, it is sufficient if the first action is determined according to the operation mechanism of a device such as the mobile robot 20.

The first action determination unit 40B learns the reinforcement learning model to output the first action which has a higher reward and can be obtained in the current state by using the current state and the reward of the mobile robot 20 acquired by the acquisition unit 40A. For the algorithm of the reinforcement learning, a known reinforcement learning algorithm may be used. For example, Q-Learning, Sarsa, Actor-Critic, or the like is used as the algorithm of the reinforcement learning.

The first action determination unit 40B outputs the first action determined based on learning using the reinforcement learning model to the selection unit 40D.

Next, the second action determination unit 40C will be described. The second action determination unit 40C determines the second action of the mobile robot 20 on the basis of the current state and a first rule. That is, the second action determination unit 40C determines the second action based on rules using the first rule.

The second action is information indicating an action to be taken next by the mobile robot 20. In other words, the second action is information indicating an action determined based on rules. The second action may be, for example, information indicating the traveling direction of the mobile robot 20 similarly to the first action. Alternatively, similarly to the first action, the second action may be information indicating the traveling direction and the target speed of the mobile robot 20, and the like.

The first rule is a rule that satisfies at least one of the safety guarantee of the mobile robot 20 and the minimum required performance related to the action of the mobile robot 20. The minimum required performance is a minimum required performance for the mobile robot 20 determined in advance by an administrator or the like of the mobile robot 20.

For example, the first rule is a rule indicating traveling along a route determined by a search algorithm such as an A* (A-star) method from the departure point information, the destination point information, and the map information. In addition, the first rule is a rule indicating traveling of stopping before the obstacle C or avoiding the obstacle C in a case where the obstacle C exists. Incidentally, in the case of the rule of stopping before the obstacle C, collision with the obstacle C is avoided. However, when the number of obstacles C detected before the mobile robot 20 reaches the destination point B increases, the action efficiency of the mobile robot 20 per unit time decreases. Therefore, it is preferable to set the first rule to satisfy both the safety guarantee and the minimum required performance.

The second action determination unit 40C determines a second action that the mobile robot 20 takes next from the current state such that the next action of the mobile robot 20 follows the first rule. For example, the second action determination unit 40C determines the second action by inference or the like using IF-THEN rule expression according to the first rule.

The second action determination unit 40C outputs the second action determined based on rules using the first rule to the selection unit 40D.

The selection unit 40D selects one of the first action and the second action as a third action to be output to the mobile robot 20 according to the progress of learning of the reinforcement learning model by the first action determination unit 40B.

As described above, the first action is an action determined based on learning using the reinforcement learning model. The second action is an action determined based on rules using the first rule. The selection unit 40D selects one of the learning-based first action and the rule-based second action as the third action according to the progress of learning of the reinforcement learning model.

The progress of learning of the reinforcement learning model is represented by at least one of the learning time of the reinforcement learning model and the value function learned by the reinforcement learning model.

A case is be described in which the learning time of the reinforcement learning model is used as the progress of learning of the reinforcement learning model. The learning time is represented by, for example, the number of trials or a calculation time of the reinforcement learning model.

The selection unit 40D changes a probability of selecting the first action and a probability of selecting the second action according to the learning time of the reinforcement learning model.

Specifically, the selection unit 40D decreases the probability of selecting the first action and increases the probability of selecting the second action when the learning time decreases, and increases the probability of selecting the first action and decreases the probability of selecting the second action when the learning time increases. That is, the selection unit 40D sets the probability of selecting the learning-based first action to be smaller than the probability of selecting the rule-based second action at the start of learning. Then, the selection unit 40D linearly increases the probability of selecting the learning-based first action according to the elapse of the learning time.

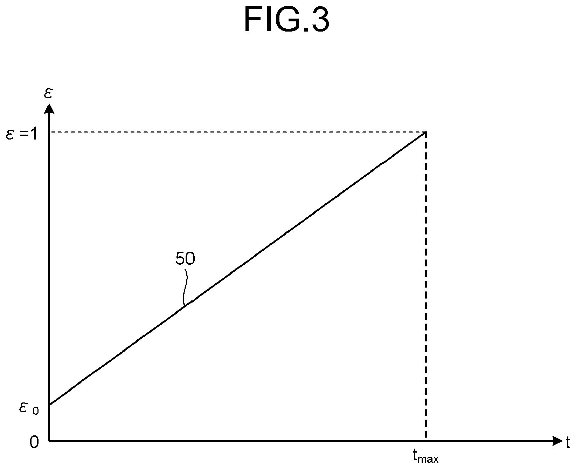

FIG. 3 is an explanatory diagram of one example of the probability of selecting the first action. The probability of selecting the first action is denoted by ε, and the probability of selecting the second action is denoted by 1-ε. The learning time is denoted by t. In FIG. 3, a vertical axis represents the probability of selecting the first action, and a horizontal axis represents the learning time.

For example, the probability of selecting the first action at the learning start time, that is, the time of t = 0 is denoted by ε = ε₀. The maximum learning time is denoted by tₘₐₓ, and the probability of selecting the first action at time t is denoted by ε = ε₀ (t/tₘₐₓ). In this case, the probability of selecting the second action is denoted by 1 - ε = So (1 - t/tₘₐₓ).

The selection unit 40D decreases the probability of selecting the first action at the learning start time point. For example, ε = ε₀ = 0.05. Then, the selection unit 40D increases the probability of selecting the first action and decreases the probability of selecting the second action when the learning time elapses. Therefore, the probability ε of selecting the first action by the selection unit 40D is represented by, for example, a line diagram 50 illustrated in FIG. 3.

Therefore, in the initial stage of learning in which the learning of the reinforcement learning model is insufficient, the probability that the second action determined based on rules is selected as the third action increases. Then, when the progress of the learning of the reinforcement learning model progresses, the probability that the first action determined based on learning is selected as the third action increases.

That is, as compared with a case where only the first action or only the second action is selected as the third action regardless of the progress of learning, the selection unit 40D can select an action with a higher obtainable reward as the third action. In other words, the selection unit 40D can select the third action capable of learning the reinforcement learning model while satisfying the minimum required performance related to the action of the mobile robot 20 over all stages from the initial stage of learning of the reinforcement learning model to the stage where the learning has sufficiently progressed.

Incidentally, FIG. 3 illustrates, an example, an aspect in which the probability of selecting the first action is linearly changed with respect to the learning time. However, the change in the probability of selecting the first action is not limited to the aspect of the linear change. In addition, the change in the probability of selecting the first action may be appropriately changed by an operation instruction of the input unit 44 by the user or the like.

Incidentally, the selection unit 40D may use the value function learned by the reinforcement learning model as the progress of learning of the reinforcement learning model.

The value function may be referred to as an estimation value function. The value function is, for example, a state value function, an action value function, an advantage function, or the like.

In this case, the selection unit 40D selects one of the first action and the second action as the third action according to the estimation value of each of the first action and the second action calculated by the value function.

For example, a case is described in which the action value function is used as the value function. In the first action determination unit 40B, the reinforcement learning model learns an action value function Q. The action value function Q (S,A) calculates an estimation value in a case where an action A is selected in a state S.

The selection unit 40D calculates the estimation value of the first action by using the action value function Q (S,A). Similarly, the selection unit 40D calculates the estimation value of the second action by using the action value function Q (S,A). Then, the selection unit 40D changes the probability of selecting the first action and the probability of selecting the second action according to the estimation values of the first action and the second action. It is sufficient if the selection unit 40D increases the probabilities of selecting the first action and the second action as the third action when the estimation values are higher.

The selection unit 40D may increase the probability of selecting an action having a higher estimation value among the first action and the second action when a difference between the estimation value of the first action and the estimation value of the second action increases.

Incidentally, the selection unit 40D may select, as the third action, an action having a higher estimation value calculated by the action value function Q (S,A) among the first action and the second action.

The selection unit 40D may use both the learning time of the reinforcement learning model and the value function learned by the reinforcement learning model as the progress of learning of the reinforcement learning model.

In this case, it is sufficient if the selection unit 40D changes the probability of selecting the first action and the probability of selecting the second action on the basis of the learning time and the value function.

For example, in a case where the learning time is less than a predetermined time, the selection unit 40D decreases the probability of selecting the first action and increases the probability of selecting the second action when the learning time decreases, and increases the probability of selecting the first action and decreases the probability of selecting the second action when the learning time increases. Then, in a case where the learning time is equal to or longer than the predetermined time, it is sufficient if the selection unit 40D selects, as the third action, the action having a higher estimation value calculated by the action value function Q (S,A) among the first action and the second action. It is sufficient if the predetermined time is set in advance. Furthermore, the predetermined time may be changeable by the operation instruction of the input unit 44 by the user or the like.

In the above example, one action value function Q (S,A) is learned by the reinforcement learning model of the first action determination unit 40B, and the estimation values of the first action and the second action are calculated. However, the reinforcement learning model may learn an action value function Q1 (S,A) related to the first action determination unit 40B and an action value function Q2 (S,A) related to the second action determination unit 40C, and calculate the estimation values of the first action and the second action.

In this case, the estimation value of the first action is calculated by using the action value function Q1 (S,A), and the estimation value of the second action is calculated by using the action value function Q2 (S,A).

In the learning of the action value function Q1 (S,A) related to the first action determination unit 40B, the reinforcement learning model learns using learning data in a case where the first action and the second action have been executed, and in the learning of the action value function Q2 (S,A) related to the first action determination unit 40B, the reinforcement learning model learns using only learning data in a case where the second action has been executed.

Returning to FIG. 2, the description is continued.

The display control unit 40E displays various images on the display unit 46.

In this arrangement, the display control unit 40E displays, on the display unit 46, at least one of the progress of learning of the reinforcement learning model, at least one of the probability that the selection unit 40D selects the first action and the probability that the selection unit 40D selects the second action, information indicating whether the third action is the first action or the second action, the number of times that the selection unit 40D selects the first action, and the number of times that the selection unit 40D selects the second action.

The progress of learning of the reinforcement learning model displayed by the display control unit 40E is the progress at the current time. For example, the display control unit 40E displays the learning time of the reinforcement learning model, the time until the end of learning of the reinforcement learning model, and the like as the progress at the current time. Therefore, the display control unit 40E can provide the user with the progress status of learning of the reinforcement learning model at the current time.

The probability displayed by the display control unit 40E is at least one of the probability that the selection unit 40D selects the first action and the probability that the selection unit selects the second action at the current time. As described above, the probability that the selection unit 40D selects the first action or the second action changes according to the progress of learning. Therefore, by displaying the probability, the display control unit 40E can provide the user with at least one of the probability of selecting the first action and the probability of selecting the second action at the current time.

The information which is displayed by the display control unit 40E and indicates whether the third action is the first action or the second action is information indicating the third action selected by the selection unit 40D at the current time. Therefore, the display control unit 40E can provide the information indicating whether the next action to be taken by the mobile robot 20 at the current time is the first action or the second action such that the user can easily checks the information.

The display control unit 40E displays, on the display unit 46, the number of times the first action has been selected and the number of times the second action has been selected by the current time, whereby the user can be easily provided with the selection status of the first action and the second action.

The display control unit 40E may display these pieces of information on one display screen or on a plurality of different display screens. In addition, the display control unit 40E may display all of these pieces of information on the display screen at the same timing, or may display at least one piece of information on the display screen at a timing different from the other pieces of information.

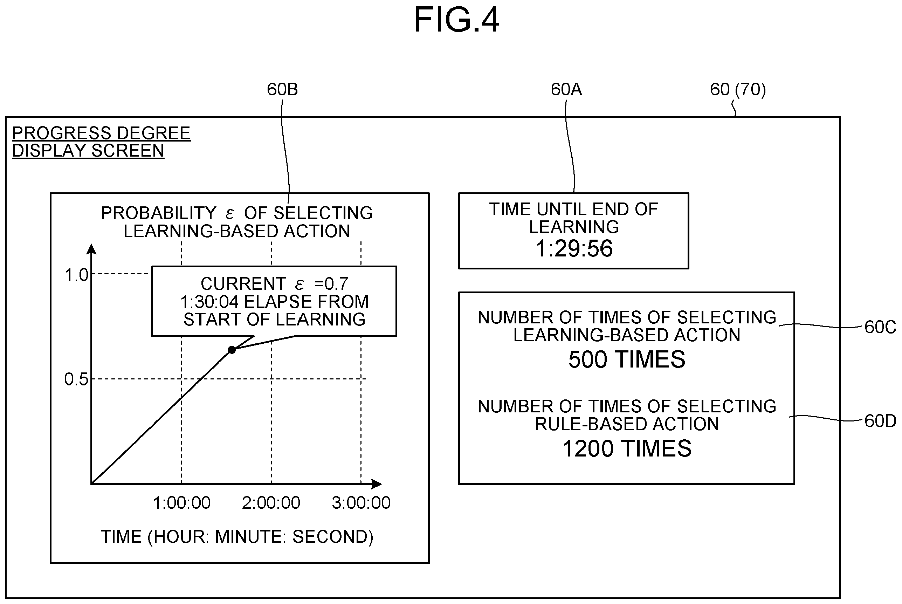

FIGS. 4 to 6 are schematic diagrams illustrating an example of a display screen 70.

FIG. 4 is a schematic diagram illustrating an example of a display screen 60. The display screen 60 is an example of the display screen 70.

The display screen 60 includes an image 60A representing the progress of learning of the reinforcement learning model, a probability 60B of selecting the first action, the number 60C of times of selecting the first action, and the number 60D of times of selecting the second action. FIG. 4 illustrates, as an example, a time until the end of learning of the reinforcement learning model as the image 60A representing the progress of learning of the reinforcement learning model.

It is sufficient if the display control unit 40E may generate and display the display screen 60 by using the third action selected by the selection unit 40D, the probability ε of selecting the first action used in the selection of the third action, and the first action, the second action, and the progress used in the selection of the third action.

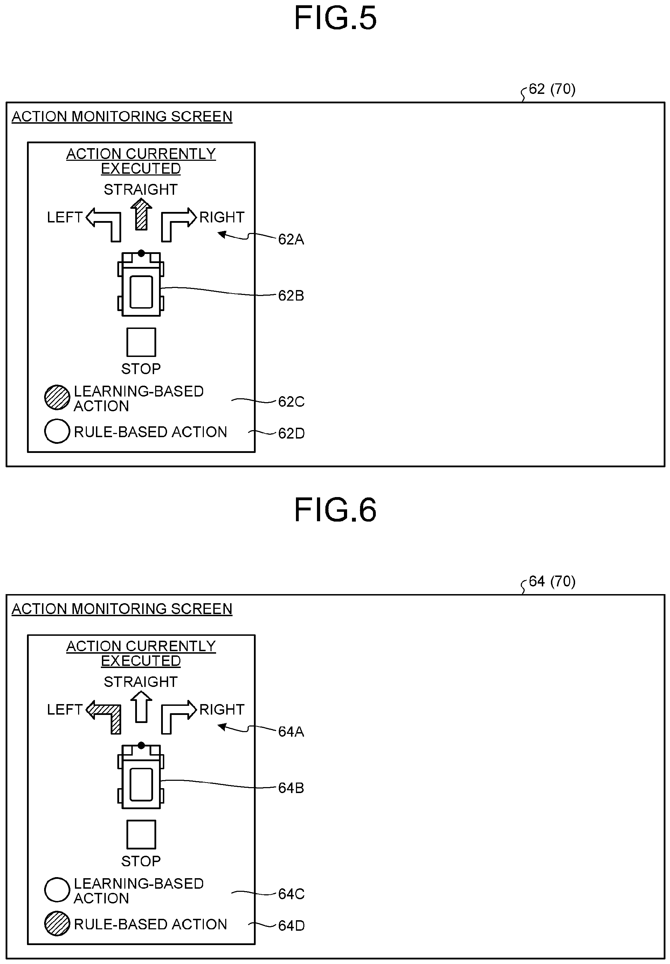

FIG. 5 is a schematic diagram illustrating an example of a display screen 62. The display screen 62 is an example of the display screen 70.

The display screen 62 includes information indicating whether the third action is the first action or the second action. For example, a case is assumed in which action candidates of the mobile robot 20 are "straight", "right", "left", and "stop", which are traveling directions. Then, a case is assumed in which the first action is selected as the third action by the selection unit 40D, and the selected first action indicates the traveling direction "straight".

In this case, for example, the display control unit 40E displays information 62C indicating the learning-based action which is the first action and information 62D indicating the rule-based action which is the second action. Then, the display control unit 40E causes the selection icon of the information 62C to be displayed in color and the selection icon of the information 62D to be displayed in colorless. By displaying the selection icon of the information 62C in color, the display control unit 40E displays a state where the first action is selected as the third action.

For example, the display control unit 40E displays an image representing the action candidate of the mobile robot 20 around an icon image 62B representing the mobile robot 20. Then, the display control unit 40E displays the image representing the selected "straight" in a color or brightness different from those of the other action candidates. For example, the display control unit 40E turns ON light on the image representing "straight" and turns OFF light on the images representing the other action candidates (refer to a display area 62A in Fig. 5). By turning ON light on the image representing "straight", the display control unit 40E displays a state where the traveling direction "straight" which is the first action is selected as the third action.

FIG. 6 is a schematic diagram illustrating an example of a display screen 64. The display screen 64 is an example of the display screen 70.

The display screen 64 includes the information indicating whether the third action is the first action or the second action. For example, a case is assumed in which action candidates of the mobile robot 20 are "straight", "right", "left", and "stop", which are traveling directions. Then, a case is assumed in which the second action is selected as the third action by the selection unit 40D, and the selected second action indicates the traveling direction "left".

In this case, for example, the display control unit 40E displays information 64C indicating the learning-based action which is the first action and information 64D indicating the rule-based action which is the second action. Then, the display control unit 40E causes the selection icon of the information 64D to be displayed in color and the selection icon of the information 64C to be displayed in colorless. By displaying the selection icon of the information 64D in color, the display control unit 40E displays a state where the second action is selected as the third action.

For example, the display control unit 40E displays an image representing the action candidate of the mobile robot 20 around an icon image 64B representing the mobile robot 20. Then, the display control unit 40E displays the image representing the selected "left" in a color or brightness different from those of the other action candidates. For example, the display control unit 40E turns ON light on the image representing "left" and turns OFF light on the image representing the other action candidates (refer to a display area 64A in Fig. 6). By turning ON light on the image representing "left", the display control unit 40E displays a state where the traveling direction "left" which is the second action is selected as the third action.

Since the display control unit 40E displays these display screens 70 on the display unit 46, it is possible to provide the user with various types of information such as the progress status of learning in an easy-to-understand manner. Therefore, the user can easily grasp whether the learning of the reinforcement learning model related to the action of the mobile robot 20 is in progress or completed by checking the display screen 70.

Returning to FIG. 2, the description is continued.

The transmission control unit 40F transmits the third action selected by the selection unit 40D to the mobile robot 20 via the communication unit 48.

The control unit 22 of the mobile robot 20 receives the map information from the operation management system 30 via the communication unit 24. The control unit 22 controls the drive unit of the mobile robot 20 to start an action of moving from the departure point A indicated by the departure point information included in the map information toward the destination point B indicated by the destination point information included in the map information. With this process, the mobile robot 20 starts the action.

When starting the action, the control unit 22 of the mobile robot 20 transmits the detection result of the sensor 26 to the learning device 10A. The control unit 22 sequentially transmits the detection result of the sensor 26 to the learning device 10A at predetermined intervals. The control unit 22 receives the third action from the learning device 10A as a response to the transmitted detection result. The control unit 22 controls the drive unit of the mobile robot 20 to execute the action corresponding to the received third action.

Therefore, the mobile robot 20 executes the third action determined by the learning device 10A. That is, the mobile robot 20 can move from the departure point A toward the destination point B by acting along the third action sequentially transmitted from the learning device 10A.

Next, an example of a flow of the information processing of the learning device 10A of this arrangement will be described.

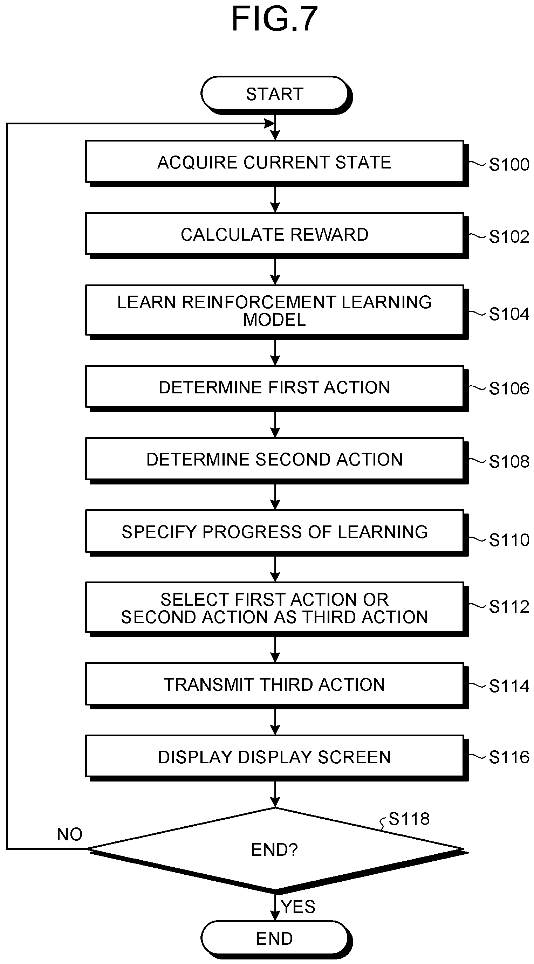

FIG. 7 is a flowchart illustrating an example of the flow of the information processing executed by the learning device 10A of this arrangement.

The acquisition unit 40A acquires the current state of the mobile robot 20 (Step S100). The acquisition unit 40A acquires the current state of the mobile robot 20 by using the detection result of the sensor 26 received from the mobile robot 20 and the map information received from the operation management system 30.

Next, the acquisition unit 40A calculates a reward in the current state acquired in Step S100 (Step S102).

The first action determination unit 40B performs the reinforcement learning on the reinforcement learning model to output the first action which has a higher reward and can be obtained in the current state by using the current state acquired in Step S100 and the reward calculated in Step S102 (Step S104).

The first action determination unit 40B determines the first action (Step S106). The first action determination unit 40B determines the first action as an output from the reinforcement learning model by inputting the current state acquired in Step S100 to the reinforcement learning model subjected to the reinforcement learning in Step S104.

The second action determination unit 40C determines the second action (Step S108). The second action determination unit 40C determines the second action of the mobile robot 20 on the basis of the current state acquired in Step S100 and the first rule.

Next, the selection unit 40D specifies the progress of learning of the reinforcement learning model of the first action determination unit 40B (Step S110). For example, the selection unit 40D specifies the learning time of the reinforcement learning model as the progress of learning. Incidentally, as described above, the selection unit 40D may specify, as the progress of learning, the value function learned by the reinforcement learning model or the learning time and the value function.

The selection unit 40D selects, as the third action, one of the first action determined in Step S106 and the second action determined in Step S108 according to the progress of learning specified in Step S110 (Step S112).

The transmission control unit 40F transmits the third action selected in Step S112 to the mobile robot 20 (Step S114) .

The display control unit 40E displays the display screen 70 on the display unit 46 (Step S116). Incidentally, the timing at which the display screen 70 is displayed on the display unit 46 is not limited to this timing. For example, the display control unit 40E may start displaying the display screen 70 on the display unit 46 before starting the processing in Step S100, and update the display content of the display screen 70 according to the processing status by the control unit 40.

The control unit 40 determines whether or not to end the processing (Step S118). For example, the control unit 40 performs the determination of Step S118 by determining whether or not a signal indicating the end of processing has been input by the operation instruction of the input unit 44 by the user or the like. When a negative determination is made in Step S118 (Step S118: No), the process returns to Step S100. When an affirmative determination is made in Step S118 (Step S118: Yes), this routine is ended.

Next, an example of a flow of information processing of the mobile robot 20 according to this arrangement will be described.

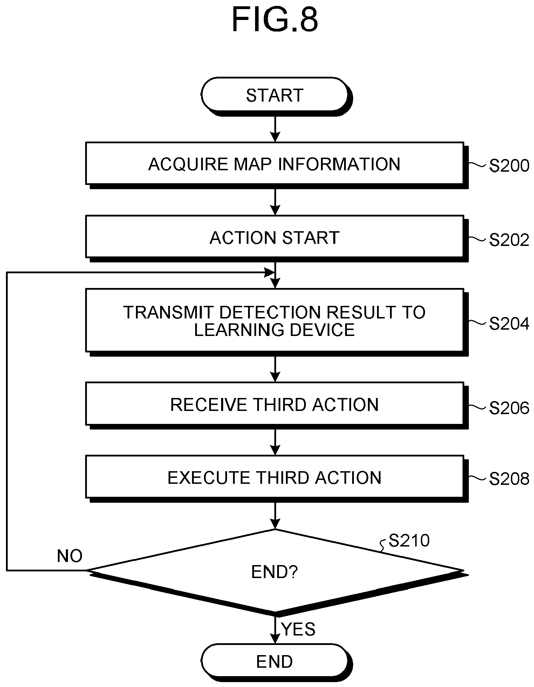

FIG. 8 is a flowchart illustrating an example of the flow of the information processing executed by the mobile robot 20 according to this arrangement.

The control unit 22 of the mobile robot 20 acquires the map information from the operation management system 30 via the communication unit 24 (Step S200). The control unit 22 controls the drive unit of the mobile robot 20 to start an action of moving from the departure point A indicated by the departure point information included in the map information toward the destination point B indicated by the destination point information included in the map information. With this process, the mobile robot 20 starts the action (Step S202).

The control unit 22 transmits the detection result of the sensor 26 to the learning device 10A (Step S204).

The control unit 22 receives the third action from the learning device 10A as a response to the detection result transmitted in Step S204 (Step S206). The control unit 22 controls the drive unit of the mobile robot 20 to execute the action corresponding to the received third action.

Therefore, the mobile robot 20 executes the third action determined by the learning device 10A (Step S208).

The control unit 22 determines whether or not to end the processing (Step S210). For example, the control unit 22 determines whether or not to end the processing by determining whether or not a processing end signal has been input by an operation instruction by the user or the like (Step S210). When a negative determination is made in Step S210 (Step S210: No), the process returns to Step S204. On the other hand, when an affirmative determination is made in Step S210 (Step S210: Yes), this routine is ended.

As described above, the learning device 10A according to this arrangement includes the acquisition unit 40A, the first action determination unit 40B, the second action determination unit 40C, and the selection unit 40D. The acquisition unit 40A acquires the current state of the mobile robot 20 as a device. The first action determination unit 40B has a learning function of learning the reinforcement learning model, and determines the first action of the mobile robot 20 on the basis of the current state and the reinforcement learning model. The second action determination unit 40C determines the second action of the mobile robot 20 on the basis of the current state and a first rule. The selection unit 40D selects one of the first action and the second action as the third action to be output to the mobile robot 20 according to the progress of learning of the reinforcement learning model.

The first action is an action determined based on learning using the reinforcement learning model. The second action is an action determined based on rules of the first rule. The selection unit 40D selects one of the first action and the second action as the third action according to the progress of learning of the reinforcement learning model.

Therefore, the selection unit 40D can select, as the third action, the second action determined based on rules at the initial stage of learning in which learning of the reinforcement learning model is insufficient, and can increase the probability of selecting, as the third action, the first action determined based on learning when the progress of learning of the reinforcement learning model progresses.

That is, as compared with a case where only the first action or only the second action is selected as the third action regardless of the progress of learning, the selection unit 40D can select an action with a higher obtainable reward as the third action. In other words, the selection unit 40D can select the third action capable of learning the reinforcement learning model while satisfying the minimum required performance related to the action of the mobile robot 20 over all stages from the initial stage of learning of the reinforcement learning model to the stage where the learning has sufficiently progressed.

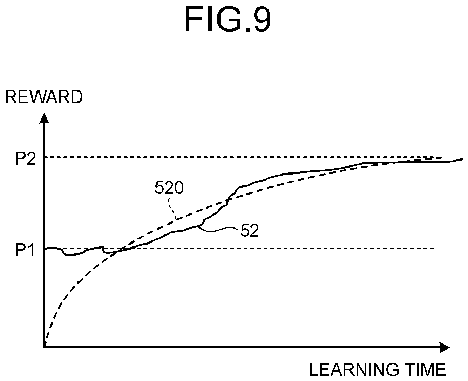

FIG. 9 is an explanatory diagram of an example of a reward curve.

In FIG. 9, a vertical axis represents a reward, and a horizontal axis represents a learning time. In FIG. 9, P1 represents a reward that satisfies the minimum required performance of the mobile robot 20. P2 represents a reward that satisfies the optimum required performance of the mobile robot 20. A line diagram 52 is a line diagram indicating a reward curve according to the reinforcement learning method of this arrangement. A line diagram 520 is a line diagram indicating a reward curve according to a conventional reinforcement learning method.

As illustrated in FIG. 9, in the conventional reinforcement learning method, random action selection is performed particularly at the beginning of learning. Therefore, the mobile robot 20 cannot reach the destination point B and cannot acquire the reward. In addition, in the conventional reinforcement learning method, it takes time to reach the reward P2 that satisfies the optimum required performance. In addition, in the related art, when the mobile robot 20 executes an action determined based on learning at the initial stage of learning in which the learning of the reinforcement learning model is insufficient, the mobile robot 20 may enter an unintended state, and an accident or a failure may occur during the reinforcement learning.

Therefore, in the related art, it is difficult to perform the reinforcement learning while being applied to a device such as the mobile robot 20 which is an actual machine from the viewpoint of realizing the required performance and ensuring safety.

On the other hand, in the learning device 10A of this arrangement, one of the first action and the second action is selected as the third action according to the progress of learning of the reinforcement learning model. Therefore, in the learning device 10A of this arrangement, when the second action determined based on rules can be selected as the third action at the initial stage of learning in which the reinforcement learning of the reinforcement learning model is insufficient, and the progress of learning of the reinforcement learning model progresses, the probability of selecting the first action determined based on learning as the third action can be increased. Therefore, the learning device 10A of this arrangement can cause the mobile robot 20 to act while collecting the learning data while satisfying the minimum required performance over all stages from the initial stage of learning to the stage where the progress of learning has progressed.

Therefore, the learning device 10A of this arrangement can learn the reinforcement learning model during while being operated in the mobile robot 20 which is an actual machine.

Therefore, the learning device 10A of this arrangement can perform the reinforcement learning while being applied to a device.

### Second arrangement

In this arrangement, in addition to the above-described arrangement, a configuration further including a safe action determination unit (41G) that determines an action on the basis of a rule related to safety is described.

Incidentally, in this arrangement, the same reference numerals are given to portions having the same functions and configurations as those of the above-described arrangement, and a detailed description thereof will be omitted.

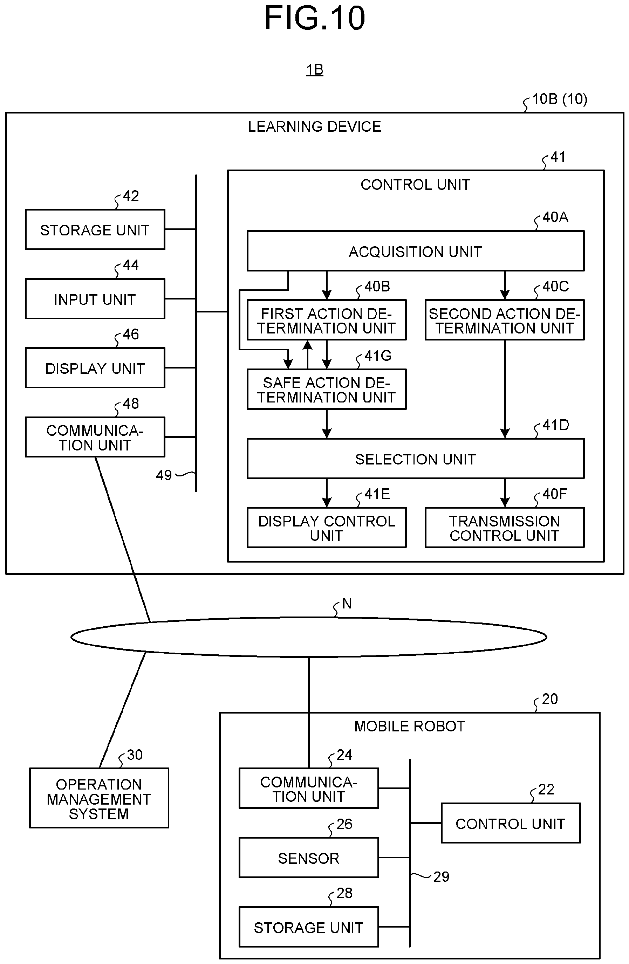

FIG. 10 is a functional block diagram of an example of a learning system 1B of this arrangement.

The learning system 1 includes a learning device 10B, the mobile robot 20, and the operation management system 30. The learning device 10B, the mobile robot 20, and the operation management system 30 are communicably connected via a network N or the like. The mobile robot 20 and the operation management system 30 are similar to those in the above-described arrangement.

The learning device 10B is an example of the learning device 10. The learning device 10B includes a control unit 41, the storage unit 42, the input unit 44, the display unit 46, and the communication unit 48. The control unit 41, the storage unit 42, the input unit 44, the display unit 46, and the communication unit 48 are communicably connected via the bus 49 or the like. The learning device 10B is similar to the learning device 10A of the above-described arrangement except that the control unit 41 is provided instead of the control unit 40.

The control unit 41 executes various types of information processing in the learning device 10B.

The control unit 41 includes the acquisition unit 40A, the first action determination unit 40B, the second action determination unit 40C, a safe action determination unit 41G, a selection unit 41D, a display control unit 41E, and a transmission control unit 40F. The acquisition unit 40A, the first action determination unit 40B, the second action determination unit 40C, and the transmission control unit 40F are similar to those in the above-described arrangement.

That is, the control unit 41 is similar to the control unit 40 of the above-described arrangement except that the control unit 41 includes the selection unit 41D and the display control unit 41E instead of the selection unit 40D and the display control unit 40E, and further includes the safe action determination unit 41G.

As described in the above-described arrangement, the first action determination unit 40B determines the first action based on learning using the reinforcement learning model. The first action is a learning-based action and thus is not an action in consideration of safety according to the current state. Therefore, the first action is not necessarily a safe action. In a case where the selection unit 41D selects the rule-based second action as the third action, the safety of the mobile robot 20 is secured. However, in a case where the selection unit 41D selects the learning-based first action, the safety of the mobile robot 20 may not be secured, and the mobile robot 20 may fall into a dangerous state.

In this regard, the learning device 10B of this arrangement further includes the safe action determination unit 41G.

The safe action determination unit 41G determines a fourth action on the basis of the current state acquired by the acquisition unit 40A, the first action determined by the first action determination unit 40B, and a second rule related to safety.

The second rule is a rule that satisfies the safety guarantee of the mobile robot 20. The second rule is, for example, a rule indicating the traveling of stopping before the obstacle C or avoiding the obstacle C.

The safe action determination unit 41G determines the first action to the fourth action such that the next action of the mobile robot 20 follows the second rule.

Specifically, the safe action determination unit 41G judges for the safety of the first action on the basis of the current state acquired by the acquisition unit 40A and the second rule. For example, the safe action determination unit 41G judges for the safety of the first action by inference or the like using IF-THEN rule expression according to the second rule.

Specifically, for example, the safe action determination unit 41G judges for the safety of the first action according to the following second rule.

For example, in a case where the mobile robot 20 executes the first action in the current state, the safe action determination unit 41G calculates an entry possibility that the mobile robot 20 enters the entry prohibition area D. In a case where the calculation result of the entry possibility is lower than the first threshold value, the safe action determination unit 41G judges as that the first action is safe. On the other hand, in a case where the calculation result of the entry possibility is equal to or higher than the first threshold value, the safe action determination unit 41G judges as that the first action is not safe. It is sufficient if the first threshold value is determined in advance. Furthermore, the first threshold value may be changeable by the operation instruction of the input unit 44 by the user or the like.

For example, in a case where the mobile robot 20 executes the first action in the current state, the safe action determination unit 41G calculates a collision possibility that the mobile robot 20 collides with the obstacle C. In a case where the calculation result of the collision possibility is lower than a second threshold value, the safe action determination unit 41G judges as that the first action is safe. On the other hand, in a case where the calculation result of the collision possibility is equal to or higher than the second threshold value, the safe action determination unit 41G judges as that the first action is not safe. It is sufficient if the second threshold value is determined in advance. Furthermore, the second threshold value may be changeable by the operation instruction of the input unit 44 by the user or the like.

Then, in the case where the first action is judged as safe, the safe action determination unit 41G determines the first action as the fourth action.

On the other hand, in the case where the first action is judged as not safe, the safe action determination unit 41G determines the fourth action obtained by correcting the first action to a safe action. In this case, it is sufficient if the safe action determination unit 41G corrects the first action to the safe action according to the second rule.

For example, the safe action determination unit 41G determines the safe action with high safety in advance. For example, the safe action determination unit 41G determines, as the safe action, information indicating the traveling direction "stop" in advance. Then, in the case where the first action is judged as not safe, the safe action determination unit 41G replaces the first action with a safe action determined in advance, and determines the first action as the fourth action.

Then, the safe action determination unit 41G outputs the determined fourth action to the selection unit 41D.

Furthermore, in the case where the first action is judged as not safe, the safe action determination unit 41G may output the first action and a negative reward in association with each other as the learning data of the reinforcement learning model. For example, the safe action determination unit 41G stores, as the learning data, the first action and the negative reward in association with each other in the storage unit 42. In addition, the safe action determination unit 41G may directly output the learning data in which the first action and the negative reward are associated with each other to the first action determination unit 40B. In this case, it is sufficient if the first action determination unit 40B further performs the reinforcement learning of the reinforcement learning model by using the learning data.

In this case, the control unit 41 can efficiently collect the learning data of the reinforcement learning model.

The selection unit 41D selects one of the fourth action determined from the first action and the second action as the third action to be output to the mobile robot 20 according to the progress of learning of the reinforcement learning model by the first action determination unit 40B. The selection unit 41D is similar to the selection unit 40D except that the fourth action received from the safe action determination unit 41G is used instead of the first action.

The display control unit 41E displays various images on the display unit 46.

Similarly to the display control unit 40E of the above-described arrangement, the display control unit 41E displays, on the display unit 46, at least one of the learning progress of the reinforcement learning model, at least one of the probability that the selection unit 40D selects the first action and the probability that the selection unit 40D selects the second action, information indicating whether the third action is the fourth action or the second action, the number of times that the selection unit 41D selects the fourth action, and the number of times that the selection unit 41D selects the second action.

The display control unit 41E of this arrangement may further display the judgement result of the safety of the first action by the safe action determination unit 41G on the display unit 46.

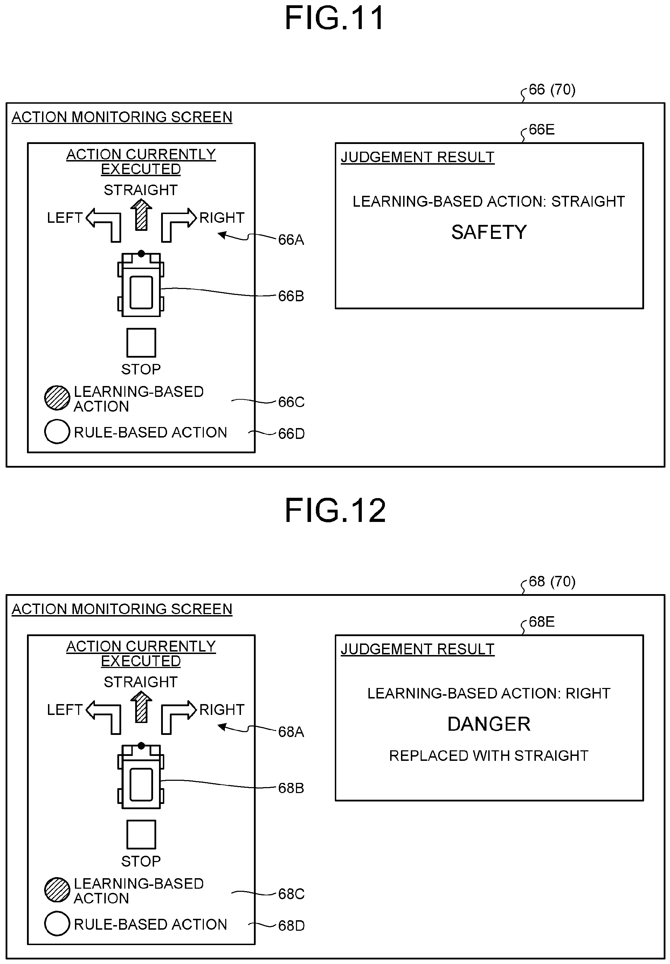

FIG. 11 is a schematic diagram illustrating an example of a display screen 66. The display screen 66 is an example of the display screen 70.

The display screen 66 includes the information indicating whether the third action is the fourth action or the second action. For example, a case is assumed in which action candidates of the mobile robot 20 are "straight", "right", "left", and "stop", which are traveling directions. In addition, a case is assumed in which the first action is "straight", the safe action determination unit 41G judges as that the first action "straight" is safe, and the first action is determined as the fourth action. Then, a case is assumed in which the fourth action is selected as the third action by the selection unit 40D, and the selected fourth action indicates "straight".

In this case, for example, the display control unit 41E displays information 66C indicating the learning-based action which is the fourth action and information 66D indicating the rule-based action which is the second action. Then, the display control unit 41E causes the selection icon of the information 66C to be displayed in color and the selection icon of the information 66D to be displayed in colorless. By displaying the selection icon of the information 66C in color, the display control unit 41E displays a state where the fourth action is selected as the third action.

For example, the display control unit 41E displays an image representing the action candidate of the mobile robot 20 around an icon image 66B representing the mobile robot 20. Then, the display control unit 41E displays the image representing the selected "straight" in a color or brightness different from those of the other action candidates. For example, the display control unit 41E turns ON light on the image representing "straight" and turns OFF light on the image representing the other action candidates (refer to a display area 66A in Fig. 11). By turning ON light on the image representing "straight", the display control unit 41E displays a state where the traveling direction "straight" which is the fourth action is selected as the third action.

The display control unit 41E further displays a judgement result 66E of the safety of the first action. FIG. 11 illustrates an aspect in which information indicating that the first action is safe is displayed as the judgement result 66E. In addition, FIG. 11 illustrates an aspect in which information indicating "straight" which is the action corresponding to the first action for which the currently selected third action is the learning-based action is further displayed as the judgement result 66E. Incidentally, the display areas of the currently selected third action and the safety judgement result may be different areas.

FIG. 12 is a schematic diagram illustrating an example of a display screen 68. The display screen 68 is an example of the display screen 70.

The display screen 68 includes the information indicating whether the third action is the fourth action or the second action. For example, a case is assumed in which action candidates of the mobile robot 20 are "straight", "right", "left", and "stop", which are traveling directions. In addition, a case is assumed in which the first action is "right" and the safe action determination unit 41G judges as that the first action "right" is not safe, that is, dangerous. Then, a case is assumed in which the safe action determination unit 41G determines the fourth action obtained by correcting the "right" which is the first action to the safe "straight". Then, a case is assumed in which the fourth action is selected as the third action by the selection unit 40D, and the selected fourth action indicates "straight".

In this case, for example, the display control unit 41E displays information 68C indicating the learning-based action that is the fourth action and the information 68D indicating the rule-based action which is the second action. Then, the display control unit 41E causes the selection icon of the information 68C to be displayed in color and the selection icon of the information 68D to be displayed in colorless. By displaying the selection icon of the information 68C in color, the display control unit 41E displays a state where the fourth action is selected as the third action.

For example, the display control unit 41E displays an image representing an action candidate of the mobile robot 20 around an icon image 68B representing the mobile robot 20. Then, the display control unit 41E displays the image representing the selected "straight" in a color or brightness different from those of the other action candidates. For example, the display control unit 41E turns ON light on the image representing "straight" and turns OFF light on the image representing the other action candidates (refer to a display area 68A in Fig. 12). By turning ON light on the image representing "straight", the display control unit 41E displays a state where the traveling direction "straight" which is the fourth action is selected as the third action.

The display control unit 41E further displays a judgement result 68E of the safety of the first action. FIG. 12 illustrates an aspect in which information indicating that the first action is not safe, that is, dangerous is displayed as the judgement result 68E. In addition, FIG. 12 illustrates an aspect in which information indicating that the currently selected third action is an action obtained by correcting the first action "right" which is the learning-based action to "straight" is further displayed as the judgement result 68E. Incidentally, the display areas of the currently selected third action and the safety judgement result may be different areas.

The display control unit 41E further displays the judgement result of the safety of the first action by the safe action determination unit 41G on the display unit 46, such that whether the selected third action is the first action used as it is or the fourth action obtained by correcting the first action can be provided to the user in an easy-to-understand manner.

Next, an example of a flow of the information processing of the learning device 10B of this arrangement will be described.

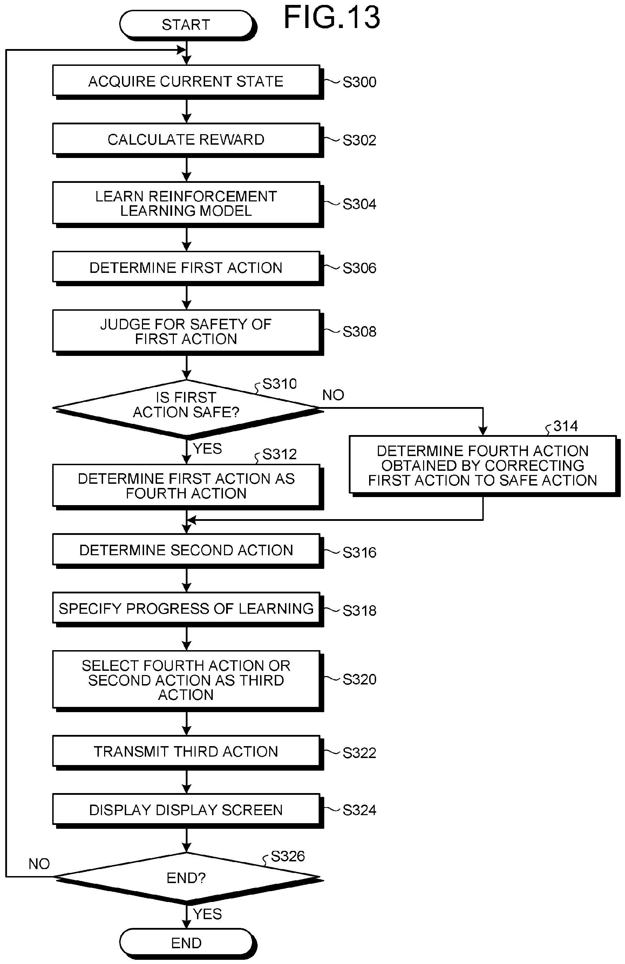

FIG. 13 is a flowchart illustrating an example of the flow of the information processing executed by the learning device 10B of this arrangement.

The acquisition unit 40A acquires the current state of the mobile robot 20 (Step S300). The acquisition unit 40A acquires the current state of the mobile robot 20 by using the detection result of the sensor 26 received from the mobile robot 20 and the map information received from the operation management system 30.

Next, the acquisition unit 40A calculates a reward in the current state acquired in Step S300 (Step S302).

The first action determination unit 40B performs the reinforcement learning on the reinforcement learning model to output the first action which has a higher reward and can be obtained in the current state by using the current state acquired in Step S300 and the reward calculated in Step S302 (Step S304).

The first action determination unit 40B determines the first action (Step S306). The first action determination unit 40B determines the first action as an output from the reinforcement learning model by inputting the current state acquired in Step S300 to the reinforcement learning model subjected to the reinforcement learning in Step S304.

The safe action determination unit 41G judges for the safety of the first action determined in Step S306 (Step S308). The safe action determination unit 41G judges for the safety of the first action by using the second rule and the current state acquired in Step S300.

When the first action is judged as safe (Step S310: Yes), the process proceeds to Step S312. In Step S312, the safe action determination unit 41G determines the first action determined in Step S306 as the fourth action. Then, the process proceeds to Step S316 described later.

On the other hand, when the first action is judged as not safe (Step S310: No), the process proceeds to Step S314. In Step S314, the safe action determination unit 41G determines the fourth action obtained by correcting the first action determined in Step S306 into a safe action (Step S314). Then, the process proceeds to Step S316.

In Step S316, the second action determination unit 40C determines the second action (Step S316). The second action determination unit 40C determines the second action of the mobile robot 20 on the basis of the current state acquired in Step S300 and the first rule.

The selection unit 41D specifies the progress of learning of the reinforcement learning model of the first action determination unit 40B (Step S318). For example, the selection unit 41D specifies the learning time of the reinforcement learning model as the progress of learning. Incidentally, as described above, the selection unit 41D may specify, as the progress of learning, the value function learned by the reinforcement learning model or the learning time and the value function.

The selection unit 41D selects, as the third action, one of the fourth action determined in Step S312 or Step S314 and the second action determined in Step S316 according to the progress of learning specified in Step S318 (Step S320).

The transmission control unit 40F transmits the third action selected in Step S320 to the mobile robot 20 (Step S322) .

The display control unit 41E displays the display screen 70 on the display unit 46 (Step S324). Incidentally, the timing at which the display screen 70 is displayed on the display unit 46 is not limited to this timing. For example, the display control unit 41E may start displaying the display screen 70 on the display unit 46 before starting the processing in Step S300, and update the display content of the display screen 70 according to the processing status by the control unit 41.

The control unit 41 determines whether or not to end the processing (Step S326). For example, the control unit 41 performs the determination of Step S326 by determining whether or not a signal indicating the end of processing has been input by the operation instruction of the input unit 44 by the user or the like. When a negative determination is made in Step S326 (Step S326: No), the process returns to Step S300. When an affirmative determination is made in Step S326 (Step S326: Yes), this routine is ended.

As described above, in the learning device 10B of this arrangement, the safe action determination unit 41G determines the fourth action on the basis of the current state, the first action, and the second rule related to safety. The selection unit 41D selects one of the fourth action determined from the first action and the second action as the third action according to the progress.

As described in the above-described arrangement, the first action determination unit 40B determines the first action based on learning using the reinforcement learning model. The first action is a learning-based action and thus is not an action in consideration of safety according to the current state. Therefore, the first action is not necessarily a safe action. In a case where the selection unit 41D selects the rule-based second action as the third action, the safety of the mobile robot 20 is secured. However, in a case where the selection unit 41D selects the learning-based first action, the safety of the mobile robot 20 may not be secured, and the mobile robot 20 may fall into a dangerous state.

In this regard, in the learning device 10B of this arrangement, the safe action determination unit 41G determines the fourth action on the basis of the current state acquired by the acquisition unit 40A, the first action determined by the first action determination unit 40B, and the second rule related to safety. Then, the selection unit 41D selects one of the fourth action determined from the first action and the second action as the third action according to the progress.

Therefore, the learning device 10B of this arrangement can secure the safety of the third action in addition to the effects of the above-described arrangement.

Next, an example of a hardware configuration of the learning device 10 (learning device 10A, learning device 10B), the mobile robot 20, and the operation management system 30 of the above-described arrangements will be described.

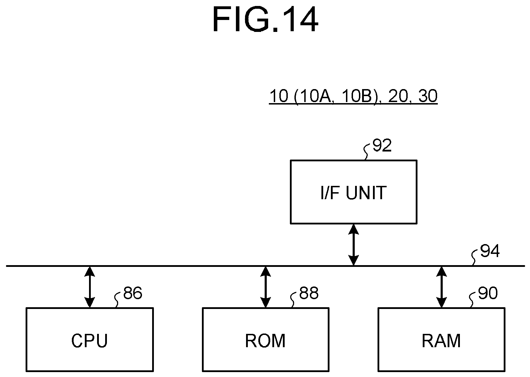

FIG. 14 is a hardware configuration diagram of an example of the learning device 10, the mobile robot 20, and the operation management system 30 of the above-described arrangements.

The learning device 10, the mobile robot 20, and the operation management system 30 of the above-described arrangements have a hardware configuration using a normal computer in which a central processing unit (CPU) 86, a read only memory (ROM) 88, a random access memory (RAM) 90, an I/F unit 92, and the like are connected to one another by a bus 94.

The CPU 86 is an arithmetic device that controls the learning device 10, the mobile robot 20, and the operation management system 30 of the above-described arrangements.

The ROM 88 stores a program or the like that realizes information processing by the CPU 86. The RAM 90 stores data necessary for various processes by the CPU 86. The I/F unit 92 is an interface for connecting to the storage unit 42, the input unit 44, the display unit 46, the communication unit 48, the communication unit 24, the sensor 26, the storage unit 28, and the like to transmit and receive data.

In the learning device 10, the mobile robot 20, and the operation management system 30 of the above-described arrangements, the CPU 86 reads a program from the ROM 88 onto the RAM 90 and executes the program, whereby the above functions are realized on the computer.

Incidentally, a program for executing each of the above-described processes executed by the learning device 10, the mobile robot 20, and the operation management system 30 of the above-described arrangements may be stored on a hard disk drive (HDD). In addition, the program for executing each of the above-described processes executed by the learning device 10, the mobile robot 20, and the operation management system 30 of the above-described arrangements may be provided by being incorporated in the ROM 88 in advance.

The programs for executing the above-described processes executed by the learning device 10, the mobile robot 20, and the operation management system 30 according to the above-described arrangements may be stored as a file in an installable format or an executable format on a computerreadable storage medium such as a CD-ROM, a CD-R, a memory card, a digital versatile disk (DVD), or a flexible disk (FD) and provided as a computer program product. In addition, the program for executing the above-described information processing executed by the learning device 10, the mobile robot 20, and the operation management system 30 of the above-described arrangements may be stored on a computer connected to a network such as the Internet and provided by being downloaded via the network. In addition, the program for executing the above-described information processing executed by the learning device 10, the mobile robot 20, and the operation management system 30 of the above-described arrangements may be provided or distributed via a network such as the Internet.

While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made.

Example 1. A learning device (10A) according to an embodiment includes an acquisition unit (40A), a first action determination unit (40B), a second action determination unit (40C), and a selection unit (40D). The acquisition unit (40A) acquires a current state of a device. The first action determination unit (40B) has a learning function of learning a reinforcement learning model and determines a first action of the device on a basis of the current state and the reinforcement learning model. The second action determination unit (40C) determines a second action of the device on a basis of the current state and a first rule. The selection unit (40D) selects one of the first action and the second action as a third action to be output to the device according to a progress of learning of the reinforcement learning model.

Example 2. The learning device (10A) according to example 1 further includes a safe action determination unit (41G) that determines a fourth action on a basis of the current state, the first action, and a second rule related to safety. Where, the selection unit (40D) is configured to select one of the fourth action determined from the first action and the second action as the third action according to the progress.

Example 3. In the learning device (10A) according to example 2, the safe action determination unit (41G) is configured to judge for safety of the first action on a basis of the current state and the second rule, determine the first action as the fourth action in a case where the first action is judged as safe, and determine the fourth action obtained by correcting the first action to a safe action in a case where the first action is judged as not safe.

Example 4. In the learning device (10A) according to example 3, the safe action determination unit (41G) is configured to output, as learning data of the reinforcement learning model, the first action and a negative reward in association with each other in the case where the first action is judged as not safe.

Example 5. In the learning device (10A) according to any one of examples 1 to 4, the selection unit (40D) is configured to change a probability of selecting the first action and a probability of selecting the second action according to a learning time, which is the progress, of the reinforcement learning model.

Example 6. In the learning device (10A) according to example 5, the selection unit (40D) is configured to decrease the probability of selecting the first action and increase the probability of selecting the second action when the learning time which is the progress decreases, and increase the probability of selecting the first action and decrease the probability of selecting the second action when the learning time which is the progress increases.

Example 7. In the learning device (10A) according to any one of examples 1 to 6, the selection unit (40D) is configured to select one of the first action and the second action as the third action according to an estimation value of each of the first action and the second action on a basis of a value function, which is the progress, learned by the reinforcement learning model, where the estimation value is calculated by the value function.

Example 8. In the learning device (10A) according to example 7, the selection unit (40D) is configured to select, as the third action, an action for which the estimation value calculated by the value function is higher among the first action and the second action.

Example 9. In the learning device (10A) according to example 7 or 8, the selection unit (40D) is configured to increase a probability of selecting an action having a higher estimation value among the first action and the second action when a difference between the estimation value of the first action and the estimation value of the second action increases.

Example 10. In the learning device (10A) according to any one of examples 7 to 9, the selection unit (40D) is configured to change the probability of selecting the first action and the probability of selecting the second action on a basis of the learning time of the reinforcement learning model and the value function learned by the reinforcement learning model which are the progress.

Example 11. In the learning device (10A) according to example 10, in a case where the learning time is less than a predetermined time, the selection unit (40D) is configured to decrease the probability of selecting the first action and increase the probability of selecting the second action when the learning time which is the progress decreases, and the selection unit (40D) is configured to increase the probability of selecting the first action and decrease the probability of selecting the second action when the learning time which is the progress increases. In a case where the learning time is equal to or longer than the predetermined time, the selection unit (40D) is configured to select, as the third action, the action for which the estimation value calculated by the value function is higher among the first action and the second action.

Example 12. The learning device (10A) according to any one of examples 1 to 11 further includes a display control unit (41E) that causes a display unit (46) to display an image representing the progress.

Example 13. In the learning device (10A) according to example 12, the display control unit (41E)is configured to cause the display unit (46) to display at least one of the probability that the selection unit (40D) selects the first action and the probability that the selection unit (40D) selects the second action.

Example 14. In the learning device (10A) according to example 12 or 13, the display control unit (41E) is configured to cause the display unit (46) to display information indicating whether the third action is the first action or the second action.

Example 15. In the learning device (10A) according to any one of examples 12 to 14, the display control unit (41E) is configured to cause the display unit (46) to display at least one of the number of times that the selection unit (40D) selects the first action and the number of times that the selection unit (40D) selects the second action.

Example 16. In the learning device (10A) according to any one of examples 12 to 15, the display control unit (41E) is configured to cause the display unit (46) to display a judgement result of the safety of the first action.

Example 17. In the learning device (10A) according to any one of examples 1 to 16, the device is a movable body in which at least a part of mechanism operates.

Example 18. A learning method according to an arrangement includes acquiring a current state of a device; with a learning function of learning a reinforcement learning model, determining a first action of the device on a basis of the current state and the reinforcement learning model; determining a second action of the device on a basis of the current state and a first rule; and selecting one of the first action and the second action as a third action to be output to the device according to a progress of learning of the reinforcement learning model.

Example 19. A computer program product having a computer readable medium including programmed instructions for training, wherein the instructions, when executed by a computer, cause the computer to perform acquiring a current state of a device; with a learning function of learning a reinforcement learning model, determining a first action of the device on a basis of the current state and the reinforcement learning model; determining a second action of the device on a basis of the current state and a first rule; and selecting one of the first action and the second action as a third action to be output to the device according to a progress of learning of the reinforcement learning model.

## Claims

1. A learning device (10A) comprising:
an acquisition unit (40A) that acquires a current state of a device;
a first action determination unit (40B) that learns a reinforcement learning model and determines a first action of the device on a basis of the current state and the reinforcement learning model;
a second action determination unit (40C) that determines a second action of the device on a basis of the current state and a first rule; and
a selection unit (40D) that selects one of the first action and the second action as a third action to be output to the device according to a progress of learning of the reinforcement learning model.

2. The learning device (10A) according to claim 1, further comprising:
a safe action determination unit (41G) that determines a fourth action on a basis of the current state, the first action, and a second rule related to safety, wherein
the selection unit (40D) is configured to
select one of the fourth action determined from the first action and the second action as the third action according to the progress.

3. The learning device (10A) according to claim 2, wherein
the safe action determination unit (41G) is configured to
judge for safety of the first action on a basis of the current state and the second rule, determine the first action as the fourth action in a case where the first action is judged as safe, and determine the fourth action obtained by correcting the first action to a safe action in a case where the first action is judged as not safe.

4. The learning device (10A) according to claim 3, wherein
the safe action determination unit (41G) is configured to
output, as learning data of the reinforcement learning model, the first action and a negative reward in association with each other in the case where the first action is judged as not safe.

5. The learning device (10A) according to any one of claims 1 to 4, wherein
the selection unit (40D) is configured to
change a probability of selecting the first action and a probability of selecting the second action according to a learning time, which is the progress, of the reinforcement learning model.

6. The learning device (10A) according to claim 5, wherein the selection unit (40D) is configured to
decrease the probability of selecting the first action and increase the probability of selecting the second action when the learning time which is the progress decreases, and increase the probability of selecting the first action and decrease the probability of selecting the second action when the learning time which is the progress increases.

7. The learning device (10A) according to any one of claims 1 to 6, wherein
the selection unit (40D) is configured to
select one of the first action and the second action as the third action according to an estimation value of each of the first action and the second action on a basis of a value function, which is the progress, learned by the reinforcement learning model, the estimation value being calculated by the value function.

8. The learning device (10A) according to claim 7, wherein the selection unit (40D) is configured to select, as the third action, an action for which the estimation value calculated by the value function is higher among the first action and the second action.

9. The learning device (10A) according to claim 7 or 8, wherein
the selection unit (40D) is configured to
increase a probability of selecting an action having a higher estimation value among the first action and the second action when a difference between the estimation value of the first action and the estimation value of the second action increases.

10. The learning device (10A) according to any one of claims 7 to 9, wherein
the selection unit (40D) is configured to
change the probability of selecting the first action and the probability of selecting the second action on a basis of the learning time of the reinforcement learning model and the value function learned by the reinforcement learning model which are the progress.

11. The learning device (10A) according to claim 10, wherein
the selection unit (40D) is configured to,
in a case where the learning time is less than a predetermined time,
decrease the probability of selecting the first action and increase the probability of selecting the second action when the learning time which is the progress decreases, and increase the probability of selecting the first action and decrease the probability of selecting the second action when the learning time which is the progress increases; and
in a case where the learning time is equal to or longer than the predetermined time,
select, as the third action, the action for which the estimation value calculated by the value function is higher among the first action and the second action.

12. The learning device (10A) according to any one of claims 1 to 11, further comprising:
a display control unit (41E) that displays an image representing the progress on a display unit (46).

13. The learning device (10A) according to claim 12, wherein the display control unit (41E) is configured to display at least one of the probability that the selection unit (40D) selects the first action and the probability that the selection unit (40D) selects the second action on the display unit (46).

14. The learning device (10A) according to claim 12 or 13, wherein
the display control unit (41E) is configured to
display information indicating whether the third action is the first action or the second action on the display unit (46) .

15. The learning device (10A) according to any one of claims 12 to 14, wherein
the display control unit (41E) is configured to
display at least one of the number of times that the selection unit (40D) selects the first action and the number of times that the selection unit (40D) selects the second action on the display unit (46).

16. The learning device (10A) according to any one of claims 12 to 15, wherein
the display control unit (41E) is configured to
display a judgement result of the safety of the first action on the display unit (46).

17. The learning device (10A) according to any one of claims 1 to 16, wherein
the device is
a movable body in which at least a part of mechanism operates.

18. A learning method comprising:
acquiring a current state of a device;
learning a reinforcement learning model, and determining a first action of the device on a basis of the current state and the reinforcement learning model;
determining a second action of the device on a basis of the current state and a first rule; and
selecting one of the first action and the second action as a third action to be output to the device according to a progress of learning of the reinforcement learning model.

19. A computer program product having a computer readable medium including programmed instructions for training, wherein the instructions, when executed by a computer, cause the computer to perform:
acquiring a current state of a device;
learning a reinforcement learning model, and determining a first action of the device on a basis of the current state and the reinforcement learning model;
determining a second action of the device on a basis of the current state and a first rule; and
selecting one of the first action and the second action as a third action to be output to the device according to a progress of learning of the reinforcement learning model.
